(19) Europäisches Patentamt / European Patent Office / Office européen des brevets

(11) **EP 3 689 933 B1**

(12) **EUROPEAN PATENT SPECIFICATION**

(45) Date of publication and mention
of the grant of the patent:
**02.10.2024 Bulletin 2024/40**

(21) Application number: **18857422.2**

(22) Date of filing: **28.09.2018**

(51) International Patent Classification (IPC):
*C08G 18/38* (2006.01)   *C08G 18/08* (2006.01)
*C08G 18/74* (2006.01)   *G02B 1/04* (2006.01)
*G02C 7/00* (2006.01)   *C08G 18/24* (2006.01)
*C08G 18/75* (2006.01)   *C08G 18/76* (2006.01)

(52) Cooperative Patent Classification (CPC):
(C-Sets available)
**C08G 18/242; C08G 18/3876; C08G 18/757;
C08G 18/758; C08G 18/7642; G02B 1/041;
G02C 7/00**                                    (Cont.)

(86) International application number:
**PCT/JP2018/036476**

(87) International publication number:
**WO 2019/066038 (04.04.2019 Gazette 2019/14)**

(54) **METHOD FOR MANUFACTURING OPTICAL MEMBER RESIN, OPTICAL MEMBER RESIN, SPECTACLE LENS, AND SPECTACLES**

VERFAHREN ZUR HERSTELLUNG EINES HARZES EINES OPTISCHEN ELEMENTS, HARZ EINES OPTISCHEN ELEMENTS, BRILLENGLAS UND BRILLE

PROCÉDÉ DE FABRICATION DE RÉSINE D'ÉLÉMENT OPTIQUE, RÉSINE D'ÉLÉMENT OPTIQUE, VERRE DE LUNETTES ET LUNETTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2017 JP 2017192161**

(43) Date of publication of application:
**05.08.2020 Bulletin 2020/32**

(73) Proprietor: **Hoya Lens Thailand Ltd.
Pathumthani 12130 (TH)**

(72) Inventor: **KOUSAKA, Masahisa
Tokyo 160-8347 (JP)**

(74) Representative: **Kraus & Lederer PartGmbB
Thomas-Wimmer-Ring 15
80539 München (DE)**

(56) References cited:
**WO-A1-2016/143898      JP-A- 2012 136 702
JP-A- 2014 502 657        JP-A- H01 163 012
KR-A- 20130 085 914      US-A1- 2015 226 879**

(52) Cooperative Patent Classification (CPC): (Cont.)

C-Sets
**G02B 1/041, C08L 75/04, C08L 81/00**

**Description**

Technical Field

The present invention relates to a method for producing an optical component resin used for a spectacle lens.

Background Art

A resin lens is lighter than a lens formed of an inorganic material such as inorganic glass, is hard to crack, and can be dyed advantageously. Therefore, it is currently the mainstream to use a resin lens as an optical component such as a spectacle lens or a camera lens.

Patent Literature 1 describes, as a method capable of satisfactorily producing a high-performance polyurethane-based resin optical material that is colorless, transparent, and free from distortion without causing striae or white turbidity, a method for producing an optical material resin by polymerizing a polymerizable composition having a moisture content of 10 to 300 ppm and formed of a polythiol compound and a polyiso(thio)cyanate compound.

US 2015/226879 A1 describes a method of preparing a thiourethane based optical material. In particular, a method of preparing a high-quality optical material, which is colorless and transparent and is not deformed, at a high yield without generation of striae, whitening, and microbubbles is describes. The method of preparing the thiourethane based optical material is characterized in that, before cast polymerization, a polymerizable composition including a polythiol compound and a polyisocyanate compound is treated at a specific vacuum condition and then injected into a mold.

Citation List

Patent Literature

Patent Literature 1: WO 2008/047626 A

Summary of the Invention

Technical Problem

When an optical component formed of a resin is produced in several hundred units, a foreign matter appearing as a floating object may be generated, or white turbidity of a resin may occur in a small number of resins obtained by polymerization. This foreign matter or white turbidity adversely affects performance in applications of the optical component, making sell as a product difficult. However, in the method for producing an optical component resin produced by the method disclosed in the above Patent Literature 1, when producing is performed in several hundred units, a foreign matter is generated or white turbidity occurs in some resins, and there is room for improving the yield of a product.

Therefore, the present invention relates to a method for producing an optical component resin, according to claim 1, suppressing generation of a foreign matter and occurrence of white turbidity. Solution to Problem

The present inventor has found that, in production of an optical component resin, even if a very small amount of moisture is contained in an additive which is not a main component of a polymerizable composition such as an isocyanate component or a thiol component but a minor component, the moisture generates a foreign matter and causes white turbidity in some products in production in several hundreds of units. That is, it has been found that there is a correlation between presence or absence of a foreign matter and white turbidity in the optical component resin and the total moisture content contained in the additive before mixing.

The present invention provides
a method for producing an optical component resin, including:

a step of mixing a polythiol component, a polyisocyanate component, and an additive to obtain a polymerizable composition; and
a step of polymerizing the polymerizable composition, in which
the total moisture content of the additive before mixing is 1.0 ppm by mass or more and 10 ppm by mass or less with respect to the amount of the polyisocyanate component, and

a moisture content of the polythiol component is 1 ppm by mass or more and 600 ppm by mass or less, wherein the moisture content is determined as specified hereinbelow.

The present disclosure also relates to an optical component resin obtained by the above-described producing method, an optical component formed of the optical component resin, a spectacle lens including a lens substrate formed of the optical component resin, and spectacles including the spectacle lens.

Advantageous Effects of the Invention

The present invention provides a method for producing an optical component resin, suppressing generation of a foreign matter and occurrence of white turbidity. Using that resin, there can be produced an optical component resin, a spectacle lens, and spectacles.

Description of Embodiments

[Method for producing optical component resin]

A method for producing an optical component resin according to the present invention includes:

a step of mixing a polythiol component, a polyisocyanate component, and an additive to obtain a polymerizable composition; and

a step of polymerizing the polymerizable composition as defined in claim 1.

Here, in the producing method, the total moisture content of the additive before mixing is 1.0 ppm by mass or more and 10 ppm by mass or less with respect to the amount of the polyisocyanate component and a moisture content of the polythiol component is 1 ppm by mass or more and 600 ppm by mass or less.

The above configuration suppresses generation of a foreign matter and occurrence of white turbidity in an optical component to be obtained.

The method for producing an optical component resin according to an embodiment of the present invention includes: for example,

a step of mixing a polythiol component, a polyisocyanate component, and an additive to obtain a polymerizable composition (hereinafter also referred to as "mixing step");

a step of degassing the polymerizable composition (hereinafter also referred to as "degassing step");

a step of injecting the polymerizable composition into a molding die (hereinafter also referred to as "injection step"); and

a step of polymerizing the polymerizable composition (hereinafter also referred to as "polymerization step").

In the producing method according to the invention, the total moisture content of the additive before mixing is 1.0 ppm by mass or more and 10 ppm by mass or less with respect to the amount of the polyisocyanate component from a viewpoint of suppressing generation of a foreign matter and occurrence of white turbidity in an optical component to be obtained.

The total moisture content of the additive before mixing is preferably 1.5 ppm by mass or more, more preferably 2.0 ppm by mass or more, still more preferably 2.5 ppm by mass or more with respect to the amount of the polyisocyanate component. By setting the total moisture content to 1.0 ppm by mass or more, a burden of a treatment for reducing the moisture of the additive can be reduced, and a period during which the additive can be used after the reduction in moisture can be extended.

The total moisture content of the additive before mixing is preferably 8.0 ppm by mass or less, more preferably 7.0 ppm by mass or less, still more preferably 6.0 ppm by mass or less, further still more preferably 5.0 ppm by mass or less, further still more preferably 4.0 ppm by mass or less, further still more preferably 3.0 ppm by mass or less with respect to the amount of the polyisocyanate component from a viewpoint of more significantly suppressing generation of a foreign matter and occurrence of white turbidity in the optical component.

The total moisture content of the additive before mixing is preferably 1.5 ppm by mass or more and 8.0 ppm by mass or less, more preferably 2.0 ppm by mass or more and 7.0 ppm by mass or less, still more preferably 2.5 ppm or more and 6.0 ppm by mass or less, further still more preferably 2.5 ppm by mass or more and 5.0 ppm by mass or less, further still more preferably 2.5 ppm or more and 4.0 ppm by mass or less, further still more preferably 2.5 ppm by mass or more and 3.0 ppm by mass or less with respect to the amount of the polyisocyanate component.

Examples of a method for reducing the moisture content include heating drying and heating drying under reduced pressure. Heating can be performed within a temperature range not impairing the properties of the additive.

The "total moisture content of additive before mixing" is calculated from the moisture content of the additive used for mixing and the addition amount thereof. The moisture content of each additive is measured by a measuring method described in Examples.

Examples of the additive to be calculated as the total moisture content include an additive to be added to the polymerizable composition in an amount of 1 ppm by mass or more (preferably 50 ppm by mass or more, more preferably 200 ppm by mass or more) with respect to 100 parts by mass of the total amount of the polythiol component and the polyisocyanate component.

Examples of the additives include a polymerization catalyst, a release agent, an ultraviolet absorber, and an antioxidant.

The total addition amount of the additive is preferably 0.01 parts by mass or more, more preferably 0.1 parts by mass or more, still more preferably 0.5 parts by mass or more with respect to 100 parts by mass of the total amount of the polythiol component and the polyisocyanate component.

The total addition amount of the additive is preferably 5 parts by mass or less, more preferably 4 parts by mass or less, still more preferably 3 parts by mass or less, further still more preferably 2 parts by mass or less with respect to 100 parts by mass of the total amount of the polythiol component and the polyisocyanate component.

The total addition amount of the additive is preferably 0.01 parts by mass or more and 5 parts by mass or less, more preferably 0.1 parts by mass or more and 4 parts by mass or less, still more preferably 0.5 parts by mass or more and 3 parts by mass or less, further still more preferably 0.5 parts by mass or more and 2 parts by mass or less with respect to 100 parts by mass of the total amount of the polythiol component and the polyisocyanate component.

<Mixing step>

In the mixing step, the polythiol component, the polyisocyanate component, and the additive may be mixed in any order. However, it is preferable to mix the polyisocyanate component and the additive (i), and then to mix the resulting mixture with the polythiol component (ii) from a viewpoint of more significantly suppressing generation of a foreign matter and occurrence of white turbidity in the optical component.

In (i), the polyisocyanate component generally has low viscosity and good solubility, and therefore the additive is easily dissolved therein. In (i), in order to shorten dissolution time, it is preferable to add and dissolve the entire amount of the additive to the total amount of the polyisocyanate component.

[Polymerizable composition]

The polymerizable composition obtained in the mixing step contains a polythiol component, a polyisocyanate component, and an additive. Each of the components will be described below.

(Polythiol component)

Examples of the polythiol component include an ester compound of a polyol compound and a mercapto group-containing carboxylic acid compound, a linear or branched aliphatic polythiol compound, a polythiol compound having an alicyclic structure, and an aromatic polythiol compound.

In the ester compound of a polyol compound and a mercapto group-containing carboxylic acid compound, examples of the polyol compound include a compound having two or more hydroxy groups in a molecule thereof.

Examples of the polyol compound include ethylene glycol, diethylene glycol, propanediol, propanetriol, butanediol, trimethylolpropane, bis(2-hydroxyethyl) disulfide, pentaerythritol, and dipentaerythritol.

Examples of the mercapto group-containing carboxylic acid compound include thioglycolic acid, mercaptopropionic acid, a thiolactic acid compound, and thiosalicylic acid.

Examples of the ester compound of a polyol compound and a mercapto group-containing carboxylic acid compound include ethylene glycol bis(2-mercaptoacetate), ethylene glycol bis(2-mercaptopropionate), diethylene glycol bis(2-mercaptoacetate), diethylene glycol bis(2-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(2-mercaptopropionate), pentaerythritol tetrakis(3-mercaptopropionate), dipentaerythritol hexakis(2-mercaptoacetate), and dipentaerythritol hexakis(3-mercaptopropionate).

Examples of the linear or branched aliphatic polythiol compound include 1,2-ethanedithiol, 1,1-propanedithiol, 1,2-propanedithiol, 1,3-propanedithiol, 2,2-propanedithiol, 1,6-hexanedithiol, 1,2,3-propanetrithiol, 2,2-dimethylpropane-1,3-dithiol, 3,4-dimethyloxybutane-1,2-dithiol, 2,3-dimercapto-1-propanol, 1,2-dimercaptopropyl methyl ether, 2,3-dimercaptopropyl methyl ether, 2-(2-mercaptoethylthio) propane-1,3-dithiol, 2,2-bis(mercaptomethyl)-1,3-propanedithiol, bis(mercaptomethylthio) methane, tris(mercaptomethylthio) methane, bis(2-mercaptoethylthio) methane, 1,2-bis(mercaptomethylthio) ethane, 1,2-bis(2-mercaptoethylthio) ethane 1,3-bis(mercaptomethylthio) propane, 1,3-bis(2-mercaptoethylthio) propane, 1,1,2,2-tetrakis(mercaptoethylthio) ethane, 1,1,3,3-tetrakis(mercaptoethylthio) propane, 3-mercaptomethyl-1,5-dimercapto-2,4-dithiapentane, tetrakis(mercaptoethylthio) propane, bis(2-mercaptoethyl) ether, bis(2-mercaptoethyl) sulfide, bis(2-mercaptoethyl) disulfide, bis(2-mercaptoethylthio)-3-mercaptopropane, 4-mercaptomethyl-1,8-dimercapto-3,6-dithiaoctane, 4,7-bis(mercaptomethyl)-3,6,9-trithia-1,11-undecanedithiol, 4,8-bis(mercaptomethyl)-3,6,9-trithia-1,11-undecanedithiol, and 5,7-bis(mercaptomethyl)-3,6,9-trithia-1,11-undecanedithiol.

Examples of the polythiol compound having an alicyclic structure include 1,1-cyclohexanedithiol, 1,2-cyclohexanedithiol, methylcyclohexanedithiol, bis(mercaptomethyl) cyclohexane, 2-(2,2-bis(mercaptomethylthio) ethyl)-1,3-dithietane, 2,5-bis(mercaptomethyl)-1,4-dithiane, and 4,8-bis(mercaptomethyl)-1,3-dithiane.

Examples of the aromatic polythiol compound include 1,3-dimercaptobenzene, 1,4-dimercaptobenzene, 1,3-bis(mercaptomethyl) benzene, 1,4-bis(mercaptomethyl) benzene, 1,3-bis(mercaptoethyl) benzene, 1,4-bis(mercaptoethyl) benzene, 1,3,5-trimercaptobenzene, 1,3,5-tris(mercaptomethyl) benzene, 1,3,5-tris(mercaptoethyl) benzene, 4,4'-dimercaptobiphenyl, 4,4'-dimercaptobibenzyl, 2,5-toluenedithiol, 1,5-naphthalenedithiol, 2,6-naphthalenedithiol, 2,7-naphthalene dithiol, 2,4-dimethylbenzene-1,3-dithiol, 4,5-dimethylbenzene-1,3-dithiol, 9,10-anthracene dimethanethiol, 1,3-di(p-methyloxyphenyl) propane-2,2-dithiol, 1,3-diphenylpropane-2,2-dithiol, phenyl methane-1,1-dithiol, and 2,4-di(p-mercaptophenyl) pentane.

One kind or two or more kinds of these compounds may be used.

The polythiol component preferably contains at least one selected from the group consisting of 2,5-bis(mercaptomethyl)-1,4-dithiane, pentaerythritol tetrakis(2-mercaptoacetate), pentaerythritol tetrakis(3-mercaptopropionate), 4-mercaptomethyl-1,8-dimercapto-3,6-dithiaoctane, 4,7-bis(mercaptomethyl)-3,6,9-trithia-1,11-undecanedithiol, 4,8-bis(mercaptomethyl)-3,6,9-trithia-1,11-undecanedithiol, 5,7-bis(mercaptomethyl)-3,6,9-trithia-1,11-undecanedithiol, trimethylolpropane tris(2-mercaptoacetate), trimethylol propane tris(3-mercaptopropionate), butanediol bis(2-mercaptoacetate), butanediol bis(3-mercaptopropionate), dipentaerythritol hexakis(2-mercaptoacetate), and dipentaerythritol hexakis(3-mercaptopropionate), more preferably contains at least one selected from the group consisting of 4,7-bis(mercaptomethyl)-3,6,9-tritia-1,11-undecanedithiol, 4,8-bis(mercaptomethyl)-3,6,9-trithia-1,11-undecanedithiol, 5,7-bis(mercaptomethyl)-3,6,9-tritia-1,11-undecanedithiol, 4-mercaptomethyl-1,8-dimercapto-3,6-dithiaoctane, pentaerythritol tetrakis(3-mercaptopropionate), 2,5-bis(mercaptomethyl)-1,4-dithiane, and pentaerythritol tetrakis(2-mercaptoacetate).

The addition amount of the polythiol component is preferably 40% by mass or more, more preferably 43% by mass or more, still more preferably 45% by mass or more, and preferably 60% by mass or less, more preferably 55% by mass or less, still more preferably 53% by mass or less with respect to the total amount of the polythiol component and the polyisocyanate component

The moisture content in the polythiol component is 1 ppm by mass or more, preferably 10 ppm by mass or more, more preferably 100 ppm by mass or more, still more preferably 150 ppm by mass or more, still more preferably 200 ppm by mass or more, and 600 ppm by mass or less, preferably 500 ppm by mass or less, more preferably 400 ppm by mass or less, still more preferably 350 ppm by mass or less, further still more preferably 300 ppm by mass or less.

(Polyisocyanate component)

Examples of the polyisocyanate component include a polyisocyanate compound having an aromatic ring, an alicyclic polyisocyanate compound, and a linear or branched aliphatic polyisocyanate compound.

Examples of the polyisocyanate compound having an aromatic ring include diisocyanatobenzene, 2,4-diisocyanatotoluene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylene bis(phenyl isocyanate), 4,4'-methylene bis(2-methyl phenyl isocyanate), bibenzyl-4,4'-diisocyanate, bis(isocyanatophenyl) ethylene, 1,3-bis(isocyanatomethyl) benzene, 1,4-bis(isocyanatomethyl) benzene, 1,3-bis(isocyanatoethyl) benzene, bis(isocyanatopropyl) benzene, $\alpha,\alpha,\alpha',\alpha'$-tetramethylxylylene diisocyanate, bis(isocyanatobutyl) benzene, bis(isocyanatomethyl) naphthalene, bis(isocyanatomethylphenyl) ether, 2-isocyanatophenyl-4-isocyanatophenyl sulfide, bis(4-isocyanatophenyl) sulfide, bis(4-isocyanatomethylphenyl) sulfide, bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methyloxy-4-isocyanatophenyl) disulfide, and bis(4-methyloxy-3-isocyanatophenyl) disulfide.

Examples of the alicyclic polyisocyanate compound include 1,3-diisocyanatocyclohexane, isophorone diisocyanate, 1,3-bis(isocyanatomethyl) cyclohexane, 1,4-bis(isocyanatomethyl) cyclohexane, dicyclohexylmethane-4,4'-diisocyanate, 2,5-bis(isocyanatomethyl)-bicyclo[2.2.1]heptane, 2,6-bis(isocyanatomethyl)-bicyclo[2.2.1]heptane, 2,5-diisocyanato-1,4-dithiane, 2,5-bis(isocyanatomethyl)-1,4-dithiane, 4,5-diisocyanato-1,3-dithiolane, 4,5-bis(isocyanatomethyl)-1,3-dithiolane, and 4,5-bis(isocyanatomethyl)-2-methyl-1,3-dithiolane.

Examples of the linear or branched aliphatic polyisocyanate compound include hexamethylene diisocyanate, 2,2-dimethylpentane diisocyanate, 2,2,4-trimethylhexane diisocyanate, butenediisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato 4-isocyanatomethyloctane, bis(isocyanatoethyl) carbonate, bis(isocyanatoethyl) ether, lysine diisocyanatomethyl ester, lysine triisocyanate, bis(isocyanatomethyl) sulfide, bis(isocyanatoethyl) sulfide, bis(isocyanatopropyl) sulfide, bis(isocyanatohexyl) sulfide bis(isocyanatomethyl) sulfone, bis(isocyanatomethyl) disulfide, bis(isocyanatoethyl) disulfide, bis(isocyanatopropyl) disulfide, bis(isocyanatomethylthio) methane, bis(isocyanatoethylthio) methane, bis(isocyanatomethylthio) ethane, bis(isocyanatoethylthio) ethane, 1,5-diisocyanato-2-isocyanatomethyl-3-pentane, 1,2,3-tris(isocyanatomethylthio) propane, 1,2,3-tris (isocyanatoethylthio) propane, 3,5-dithia-1,2,6,7-heptane tetraisocyanate, 2,6-diisocyanatomethyl-3,5-dithia-1,7-heptane diisocyanate, 2,5-diisocyanatomethylthiophene, 4-isocyanatoethylthio-2,6-dithia-1,8-octanediisocyanate, 1,2-diisothiocyanatoethane, and 1,6-diisothiocyanatohexane.

One kind or two or more kinds of these compounds may be used.

The polyisocyanate component preferably contains at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl) cyclohexane, 1,4-bis(isocyanatomethyl) cyclohexane, 1,3-bis(isocyanatomethyl) benzene, 1,4-bis(isocyanatomethyl) benzene, dicyclohexylmethane-4,4'-diisocyanate, and isophorone diisocyanate, more preferably contains at least one selected from the group consisting of 1,3-bis(isocyanatomethyl) benzene, 2,5-bis(isocyanatomethyl)-bicyclo[2.2.1] heptane, 2,6-bis(isocyanatomethyl)-bicyclo[2.2.1]heptane, and 1,3-bis(isocyanatomethyl) cyclohexane.

The addition amount of the polyisocyanate component is preferably 40% by mass or more, more preferably 43% by mass or more, still more preferably 45% by mass or more, and preferably 60% by mass or less, more preferably 55% by mass or less, still more preferably 53% by mass or less with respect to the total amount of the polythiol component and the polyisocyanate component.

The addition amount of the polyisocyanate component is preferably 40% by mass or more and 60% by mass or less, more preferably 43% by mass or more and 55% by mass or less, still more preferably 45% by mass or more and 53% by mass or less with respect to the total amount of the polythiol component and the polyisocyanate component.

Examples of a suitable combination of the polythiol component and the polyisocyanate component include:

(1) 1,3-bis(isocyanatomethyl) benzene and bis(mercaptomethyl)-3,6,9-trithia-1,11-undecanedithiol,

(2) 1,3-bis(isocyanatomethyl) benzene and 4-mercaptomethyl-1,8-dimercapto-3,6-dithiaoctane,

(3) 2,5-bis(isocyanatomethyl)-bicyclo[2.2.1]heptane, 2,6-bis(isocyanatomethyl)-bicyclo[2.2.1]heptane, 4-mercaptomethyl-1,8-dimercapto-3,6-dithiaoctane, and pentaerythritol tetrakis(3-mercaptopropionate), and

(4) 1,3-bis(isocyanatomethyl) cyclohexane, 2,5-bis(mercaptomethyl)-1,4-dithiane, and pentaerythritol tetrakis(2-mercaptoacetate).

(Additive)

Examples of the additive include a polymerization catalyst, a release agent, an ultraviolet absorber, an antioxidant, a coloring inhibitor, and a fluorescent whitening agent. One kind or two or more kinds of these additives may be used.

The additive preferably contains at least one selected from the group consisting of a polymerization catalyst, a release agent, and an ultraviolet absorber.

By mixing the above various components by a usual method, an optical component resin is obtained.

(Polymerization catalyst)

Examples of the polymerization catalyst include a tin compound and a nitrogen-containing compound.

Examples of the tin compound include an alkyl tin compound and an alkyl tin halide compound.

Examples of the alkyl tin compound include dibutyl tin diacetate and dibutyl tin dilaurate.

Examples of the alkyl tin halide compound include dibutyl tin dichloride, dimethyl tin dichloride, monomethyl tin trichloride, trimethyl tin chloride, tributyl tin chloride, tributyl tin fluoride, and dimethyl tin dibromide.

Among these compounds, dibutyl tin diacetate, dibutyl tin dilaurate, dibutyl tin dichloride, and dimethyl tin dichloride are preferable, and dimethyl tin dichloride is more preferable.

Examples of the nitrogen-containing compound include a tertiary amine, a quaternary ammonium salt, an imidazole-based compound, and a pyrazole-based compound. The tertiary amine is preferably a hindered amine.

Examples of the tertiary amine include triethylamine, tri-n-propylamine, triisopropylamine, tri-n-butylamine, triisobutylamine, N,N-dimethylbenzylamine, N-methylmorpholine, N,N-dimethylcyclohexylamine, pentamethyldiethylenetriamine, bis(2-dimethylaminoethyl) ether, N-methylmorpholine, N,N'-dimethylpiperazine, N,N,N',N'-tetramethylethylenediamine, and 1,4-diazabicyclo[2.2.2]octane (DABCO).

Examples of the hindered amine include 1,2,2,6,6-pentamethyl-4-piperidinol, 1,2,2,6,6-pentamethyl-4-hydroxyethyl-4-piperidinol, methyl-1,2,2,6,6-pentamethyl-4-piperidyl sebacate, a mixture of methyl-1,2,2,6,6-pentamethyl-4-piperidyl sebacate and bis(1,2,2,6,6-pentamethyl-4-piperidyl) sebacate, bis(1,2,2,6,6-pentamethyl-4-piperidyl) sebacate, bis(2,2,6,6-tetramethyl-1-(octyloxy)-4-piperidyl) sebacate, bis(1,2,2,6,6-pentamethyl-4-piperidyl) [[3,5-bis(1,1-dimethylethyl)-4-hydroxyphenyl] methyl] butyl malonate, and tetrakis(1,2,2,6,6-pentamethyl-4-piperidyl) butane-1,2,3,4-tetracarboxylate.

Examples of the quaternary ammonium salt include tetraethylammonium hydroxide.

Examples of the imidazole-based compound include imidazole, 1,2-dimethylimidazole, benzylmethylimidazole, and 2-ethyl-4-imidazole.

Examples of the pyrazole-based compound include pyrazole and 3,5-dimethylpyrazole.

Among these compounds, the tertiary amine such as a hindered amine, the imidazole-based compound, and the pyrazole-based compound are preferable, and the hindered amine is more preferable.

The addition amount of the polymerization catalyst is preferably 0.001 parts by mass or more, more preferably 0.005 parts by mass or more, still more preferably 0.007 parts by mass or more, and preferably 2 parts by mass or less, more preferably 1 part by mass or less, still more preferably 0.5 parts by mass or less with respect to 100 parts by mass of the total amount of the polythiol component and the polyisocyanate component.

The addition amount of the polymerization catalyst is preferably 0.001 parts by mass or more and 2 parts by mass or less, more preferably 0.005 parts by mass or more and 1 part by mass or less, still more preferably 0.007 parts by mass or more and 0.5 parts by mass or less with respect to 100 parts by mass of the total amount of the polythiol component and the polyisocyanate component.

The moisture content in the polymerization catalyst is preferably 1 ppm by mass or more, more preferably 10 ppm by mass or more, still more preferably 20 ppm by mass or more, and preferably 2000 ppm by mass or less, more preferably 1000 ppm by mass or less, still more preferably 800 ppm by mass or less, further still more preferably 500 ppm by mass or less, further still more preferably 300 ppm by mass or less.

The moisture content in the polymerization catalyst is preferably 1 ppm by mass or more and 2000 ppm by mass or less, more preferably 10 ppm by mass or more and 1000 ppm by mass or less, still more preferably 20 ppm by mass or more and 800 ppm by mass or less, further still more preferably 20 ppm by mass or more and 500 ppm by mass or less, further still more preferably 20 ppm by mass or more and 300 ppm by mass or less.

(Release agent)

Examples of the release agent include an acidic phosphate such as an acidic alkyl phosphate. The number of carbon atoms in an alkyl group of the acidic alkyl phosphate is preferably 1 or more, more preferably 4 or more, and preferably 20 or less, more preferably 12 or less.

The acidic phosphate may be either a phosphoric monoester or a phosphoric diester, but a mixture of a phosphoric monoester and a phosphoric diester is preferable.

Examples of the acidic alkyl phosphate include isopropyl acid phosphate, butyl acid phosphate, octyl acid phosphate, nonyl acid phosphate, decyl acid phosphate, isodecyl acid phosphate, tridecyl acid phosphate, stearyl acid phosphate, propylphenyl acid phosphate, butylphenyl acid phosphate, and butoxyethyl acid phosphate.

The addition amount of the release agent is preferably 0.01 parts by mass or more, more preferably 0.05 parts by mass or more, still more preferably 0.10 parts by mass or more, and preferably 1.00 part by mass or less, more preferably 0.50 parts by mass or less, still more preferably 0.30 parts by mass or less with respect to 100 parts by mass of the total amount of the polythiol component and the polyisocyanate component.

The addition amount of the release agent is preferably 0.01 parts by mass or more and 1.00 part by mass or less, more preferably 0.05 parts by mass or more and 0.50 parts by mass or less, still more preferably 0.10 parts by mass or more and 0.30 parts by mass or less with respect to 100 parts by mass of the total amount of the polythiol component and the polyisocyanate component.

The moisture content in the release agent is preferably 100 ppm by mass or more, more preferably 200 ppm by mass or more, still more preferably 300 ppm by mass or more, and preferably 2000 ppm by mass or less, more preferably 1500 ppm by mass or less, still more preferably 1300 ppm by mass or less, further still more preferably 1000 ppm by mass or less, further still more preferably 800 ppm by mass or less from a viewpoint of further suppressing generation of a foreign matter and occurrence of white turbidity in the optical component.

The moisture content in the release agent is preferably 100 ppm by mass or more and 2,000 ppm by mass or less, more preferably 200 ppm by mass or more and 1,500 ppm by mass or less, still more preferably 300 ppm by mass or more and 1,300 ppm by mass or less, further still more preferably 300 ppm by mass or more and 1,000 ppm by mass or less, further still more preferably 300 ppm by mass or more and 800 ppm by mass or less from a viewpoint of further suppressing generation of a foreign matter and occurrence of white turbidity in the optical component.

(Ultraviolet absorber)

Examples of the ultraviolet absorber include a benzotriazole-based compound, a benzophenone-based compound, dibenzoylmethane, and a dibenzoylmethane-based compound. Among these compounds, the benzotriazole-based compound and the benzophenone-based compound are preferable.
Examples of the benzotriazole-based compound include 2-(2-hydroxy-5-methylphenyl)-2H-benzotriazole, 2-(2-hydroxy-3,5-di-tert-butylphenyl)-5-chloro-2H-benzotriazole, 2-(3-t-butyl-2-hydroxy-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-octylphenyl)-2H-benzotriazole, 2-(2-hydroxy-4-ethyloxyphenyl)-2H-benzotriazole, 2-(2-hydroxy-4-propyloxyphenyl)-2H-benzotriazole, 2-(2-hydroxy-4-octyloxyphenyl)-2H-benzotriazole, and 2-(2-hydroxy-4-octyloxyphenyl)-5-chloro-2H-benzotriazole.
Examples of the benzophenone-based compound include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone.
Examples of the dibenzoylmethane-based compound include 4-tert-butyl-4'-methoxydibenzoylmethane.
One kind or two or more kinds of these additives may be used.
The addition amount of the ultraviolet absorber is preferably 0.01 parts by mass or more, more preferably 0.10 parts by mass or more, still more preferably 0.30 parts by mass or more, further still more preferably 0.40 parts by mass or more, and preferably 5 parts by mass or less, more preferably 3 parts by mass or less, still more preferably 2 parts by mass or less with respect to 100 parts by mass of the total amount of the polythiol component and the polyisocyanate component.
The addition amount of the ultraviolet absorber is preferably 0.01 parts by mass or more and 5 parts by mass or less, more preferably 0.10 parts by mass or more and 3 parts by mass or less, still more preferably 0.30 parts by mass or more and 2 parts by mass or less with respect to 100 parts by mass of the total amount of the polythiol component and the polyisocyanate component.
The moisture content in the ultraviolet absorber is preferably 10 ppm by mass or more, more preferably 30 ppm by mass or more, still more preferably 50 ppm by mass or more, and preferably 300 ppm by mass or less, more preferably 200 ppm by mass or less, still more preferably 150 ppm by mass or less.
The moisture content in the ultraviolet absorber is preferably 10 ppm by mass or more and 300 ppm by mass or less, more preferably 30 ppm by mass or more and 200 ppm by mass or less, still more preferably 50 ppm by mass or more and 150 ppm by mass or less.

<Degassing step>

The polymerizable composition obtained in the mixing step preferably be treated in a degassing step from a viewpoint of further suppressing generation of a foreign matter and white turbidity in the optical component.
Degassing is performed, for example, by treating the polymerizable composition under reduced pressure.
The pressure during degassing is preferably 10 Pa or more, more preferably 50 Pa or more, still more preferably 100 Pa or more, and preferably 1000 Pa or less, more preferably 800 Pa or less, still more preferably 500 Pa or less.
The pressure during degassing is preferably 10 Pa or more and 1000 Pa or less, more preferably 50 Pa or more and 800 Pa or less, still more preferably 100 Pa or more and 500 Pa or less.

<Injection step>

In the injection step, for example, the obtained polymerizable composition is injected into a molding die.
In a case where a spectacle lens is produced as an optical component, for example, a molding die including a pair of molds to form both main surfaces of the spectacle lens and a tape or a gasket for fixing these molds with a predetermined gap is used. Note that the above-mentioned mold may be formed of glass or metal.
Prior to injection into the molding die, the polymerizable composition may be filtered. A filtration method is not particularly limited, but filtration may be performed, for example, using a filter having a pore diameter of 1 to 30 um.

<Polymerization step>

In the polymerization step, for example, the polymerizable composition is polymerized by heating.
Polymerization conditions can be appropriately set depending on the polymerizable composition and the shape of an optical component to be formed.

The polymerization initiation temperature is usually from 0 to 50°C, and preferably from 5 to 30°C. The temperature is raised from the polymerization initiation temperature, and then heating is preferably performed to perform curing formation. For example, the maximum temperature after being raised is usually from 110 to 130°C. Polymerization time from start to end of the polymerization is, for example, 3 to 96 hours.

After completion of the polymerization, the optical component may be released from a die and may be annealed. The temperature of the annealing treatment is preferably 100 to 150°C.

By the above-described method, an optical component resin is obtained.

[Optical component]

Examples of applications of the optical component resin include a spectacle lens, a camera lens, a prism, an optical fiber, a recording medium substrate used for an optical disc or a magnetic disk, and an optical component such as an optical filter attached to a display of a computer. Among these applications, the spectacle lens is preferable.

The spectacle lens preferably includes a lens substrate formed of an optical component resin (hereinafter also referred to as "spectacle lens substrate").

The surface shape of the spectacle lens substrate is not particularly limited and may be a flat surface, a convex surface, a concave surface, or the like.

The spectacle lens substrate may be a single focus lens, a multifocal lens, a progressive addition lens, or the like. For example, as one example, in the progressive addition lens, usually, a near portion area (near portion) and a corridor area (intermediate area) are included in a lower area, and a distance portion area (distance portion) is included in an upper area.

The spectacle lens substrate may be a finish type spectacle lens substrate or a semi finish type spectacle lens substrate.

The thickness of the geometrical center and the diameter of the spectacle lens substrate are not particularly limited. However, the thickness of the geometric center is usually about 0.8 to 30 mm, and the diameter is usually about 50 to 100 mm.

The refractive index (ne) of the spectacle lens substrate is, for example, 1.53 or more, 1.55 or more, 1.58 or more, or 1.60 or more, and the upper limit thereof is not particularly limited. However, as the refractive index is higher, a lens can have a thinner thickness.

The Abbe number (ve) of the spectacle lens substrate is, for example, 20 or more, 25 or more, 30 or more, or 35 or more, and the upper limit thereof is not particularly limited. However, as the Abbe number is higher, a lens has a smaller a chromatic aberration.

The spectacle lens preferably includes a spectacle lens substrate and a functional layer on a surface of the spectacle lens substrate.

As the functional layer, for example, at least one selected from the group consisting of a hard coat layer, a primer layer, an antireflection film, and a water repellent film may be used.

The hard coat layer is disposed for improving scratch resistance, and preferably can be formed by applying a coating solution containing a fine particulate inorganic material such as an organic silicon compound, tin oxide, silicon oxide, zirconium oxide, or titanium oxide.

The primer layer is disposed for improving impact resistance, and contains, for example, polyurethane as a main component. Here, the content of polyurethane is preferably 50% by mass or more in the primer layer.

Examples of the antireflection film include a film obtained by laminating an inorganic material such as silicon oxide, titanium dioxide, zirconium oxide, or tantalum oxide.

The water repellent film can be formed using an organic silicon compound containing a fluorine atom.

[Spectacles]

Spectacles include a spectacle lens and a frame in which the spectacle lens is mounted.

The frame includes, for example, a pair of rims, a bridge disposed between the rims, and a pair of temples each disposed at one end of each of the rims.

The rims may be half rims.

The frame may be a so-called rimless frame. In this case, for example, the spectacles include a pair of spectacle lenses, a bridge disposed between the spectacle lenses, and a pair of temples each disposed at one end of each of the spectacle lenses.

[Examples]

Hereinafter, specific Examples will be described.

Measurement and evaluation of various numerical values were performed by the following method.

[Measuring method]

<Moisture content>

In a glove box under an environment of a temperature of 25°C and a relative humidity of 6% or less, a Karl Fischer moisture meter "MKC-610" (manufactured by Kyoto Electronics Manufacturing Co., Ltd.) connected to a moisture vaporizer "ADP-611" (manufactured by Kyoto Electronics Manufacturing Co., Ltd.) was disposed. Using the moisture vaporizer and the Karl Fischer moisture meter, the moisture vaporizer was operated at 125°C for 20 minutes without putting a measurement sample therein, and a numerical value indicated by the Karl Fischer moisture meter was measured. The operation of the moisture vaporizer was stabilized.

Next, a tray on which no measurement sample was set was put in the moisture vaporizer, and the moisture content was measured for 20 minutes to obtain a blank value.

Subsequently, a tray on which a measurement sample was set was put in the moisture vaporizer, and the moisture content was measured for 20 minutes to obtain a moisture content measurement value of the measurement sample.

The moisture content of the measurement sample was calculated from the following formula.

Moisture content (ppm by mass) = [Measured value of moisture content of object to be measured - blank value] / addition amount of measurement sample

<Refractive index and Abbe number>

The refractive index of a sample was measured with F' line (488.0 nm), C' line (643.9 nm), and e line (546.1 nm) at 20°C using a precision refractive index meter "KPR-2000 type" (manufactured by Kalnew Optical Industrial Co., Ltd.). The Abbe number was calculated from the following formula.

$$\text{Abbe number } \nu_e = (n_e - 1)/(n_{F'} - n_{C'})$$

$n_e$ indicates a refractive index measured with e line. $n_{F'}$ indicates a refractive index measured with F' line. $n_{C'}$ indicates a refractive index measured with C' line.

[Evaluating method]

<Foreign matter generation ratio>

The obtained spectacle lens substrate was visually observed under fluorescent lighting in a dark box, and the number of spectacle lens substrates capable of confirming a foreign matter within a diameter of 30 mm from the geometric center was recorded. A foreign matter generation ratio (%) was calculated from the total number of the produced spectacle lens substrates.

<White turbidity occurrence ratio>

An area within a diameter of 30 mm from the geometric center of the spectacle lens substrate was visually observed under fluorescent lighting in a dark box, and the number of spectacle lens substrates capable of confirming white turbidity therein was recorded. A white turbidity occurrence ratio (%) was calculated from the total number of the produced spectacle lens substrates.

[Method for preparing each sample]

<Polymerization catalyst>

The samples used in Examples and Comparative Examples were heated at 120°C to adjust the moisture contents thereof.

<Release agent>

The samples used in Examples and Comparative Examples were heated to 60°C to adjust the moisture contents thereof under reduced pressure of 400 Pa.

<Ultraviolet absorber>

The samples used in Examples and Comparative Examples were heated to 120°C to adjust the moisture contents thereof.

<Polythiol>

The samples used in Examples and Comparative Examples were heated to 60°C to adjust the moisture contents thereof under reduced pressure of 400 Pa.

Example 1

(Production of spectacle lens substrate)

50.60 parts by mass of 1,3-bis(isocyanatomethyl) benzene as a polyisocyanate component, 0.012 parts by mass of dimethyltin dichloride (moisture content: 28 ppm by mass) as a polymerization catalyst, 0.15 parts by mass of an acidic phosphate "JP506H" (manufactured by Johoku Chemical Co., Ltd., moisture content: 500 ppm by mass) as a release agent, and 0.45 parts by mass of ultraviolet absorber "Seesorb 707" (manufactured by Shipro Kasei Kaisha, Ltd.) (moisture content: 143 ppm by mass) were added. The moisture content added to the polyisocyanate component by various additives was 2.76 ppm by mass with respect to the polyisocyanate component.

The resulting mixture was stirred until various additives were dissolved sufficiently. Thereafter, 49.40 parts by mass of a mixture of 4,7-bis(mercaptomethyl)-3,6,9-trithia-1,11-undecanedithiol, 4,8-bis(mercaptomethyl)-3,6,9-trithia-1,11-undecanedithiol, and 5,7-bis(mercaptomethyl)-3,6,9-trithia-1,11-undecanedithiol was added as a polythiol component and mixed to obtain a polymerizable composition. The composition of the polymerizable composition is illustrated in Table 1.

This polymerizable composition was degassed at 300 Pa for 45 minutes and then filtered with a polytetrafluoroethylene (PTFE) filter having a pore diameter of 5 um. Subsequently, the polymerizable composition was injected into a molding die including a glass mold having a desired lens shape and a gasket. The polymerizable composition which had been injected into the molding die was polymerized in an oven over 24 hours in a temperature range of 10°C to 120°C depending on the shape of the lens.

The molding die was taken out of the oven, and the resulting product was removed from the molding die to obtain a spectacle lens substrate formed of the optical component resin. The obtained lens was annealed at 120°C for two hours. The refractive index and the Abbe number of the obtained spectacle lens substrate were measured. Then, 500 sheets of spectacle lens substrates were produced by the method, and the above-described foreign matter generation ratio and white turbidity occurrence ratio were evaluated. The results are illustrated in Table 2.

Examples 2 to 8 and Comparative Examples 1 to 6

A spectacle lens substrate was obtained in a similar manner to Example 1 except that the types and amount illustrated in Table 1 were used. Measurement of refractive index and Abbe number, and evaluation of foreign matter generation ratio and white turbidity occurrence ratio were performed. The results are illustrated in Table 2.

[Table 1]

| | Polyisocyanate component | | Polymerization catalyst*3 | | | Release agent | | | Ultraviolet absorber | | | Polythiol component | | | Total moisture content of additive*3 |
|---|---|---|---|---|---|---|---|---|---|---|---|---|---|---|---|
| | Type | Amount*2 (parts by mass) | Type | Moisture*1 (ppm by mass) | Amount*2 (parts by mass) | Type | Moisture*1 (ppm by mass) | Amount*2 (parts by mass) | Type | Moisture*1 (ppm by mass) | Amount*2 (parts by mass) | Type | Moisture*1 (ppm by mass) | Amount*2 (parts by mass) | |
| Example 1 | A1 | 50.60 | C1 | 28 | 0.012 | D1 | 500 | 0.15 | E1 | 143 | 0.45 | B1 | 250 | 49.40 | 2.76 |
| Example 2 | A1 | 52.03 | C1 | 28 | 0.012 | D1 | 500 | 0.15 | E1 | 143 | 0.45 | B2 | 250 | 47.97 | 2.68 |
| Example 3 | A1 | 50.60 | C1 | 28 | 0.060 | D2 | 1200 | 0.18 | E2 | 85 | 1.00 | B1 | 250 | 49.40 | 5.98 |
| Example 4 | A2 | 50.28 | C1 | 900 | 0.012 | D1 | 500 | 0.15 | E1 | 143 | 0.45 | B2 | 250 | 24.22 | 2.99 |
| | | | | | | | | | | | | B3 | 250 | 25.50 | |
| Example 5 | A3 | 47.54 | C1 | 28 | 0.450 | D1 | 500 | 0.15 | E1 | 143 | 1.00 | B4 | 250 | 25. 99 | 4.85 |
| | | | | | | | | | | | | B5 | 250 | 26.47 | |
| Example 6 | A2 | 50.28 | C1 | 28 | 0.012 | D1 | 500 | 0.15 | E1 | 85 | 0.45 | B2 | 250 | 24.22 | 2.26 |
| | | | | | | | | | | | | B3 | 250 | 25.50 | |
| Example 7 | A2 | 50.28 | C1 | 28 | 0.012 | D2 | 1200 | 0.15 | E2 | 83 | 0.45 | B2 | 250 | 24.22 | 4.33 |
| | | | | | | | | | | | | B3 | 250 | 25.50 | |
| Example 8 | A1 | 50.60 | C1 | 28 | 0.012 | D1 | 500 | 0.15 | E1 | 143 | 0.45 | B1 | 17 | 49.40 | 2.76 |
| Comparative Example 1 | A1 | 50.60 | C1 | 2200 | 0.012 | D1 | 4200 | 0.15 | E1 | 143 | 0.45 | B1 | 250 | 49.40 | 14.48 |
| Comparative Example 2 | A1 | 52.03 | C1 | 900 | 0.012 | D1 | 4200 | 0.15 | E1 | 143 | 0.45 | B2 | 250 | 47. 97 | 13.55 |
| Comparative Example 3 | A1 | 50.60 | C1 | 900 | 0.060 | D2 | 3300 | 0.18 | E2 | 85 | 1.00 | B1 | 250 | 49.40 | 14.49 |
| Comparative Example 4 | A2 | 50.28 | C1 | 900 | 0.012 | D1 | 4200 | 0.15 | E1 | 143 | 0.45 | B2 | 250 | 24.22 | 14.02 |
| | | | | | | | | | | | | B3 | 250 | 25.50 | |

| | Polyisocyanate component | | Polymerization catalyst*3 | | | Release agent | | | Ultraviolet absorber | | | Polythiol component | | | Total moisture content of additive*3 |
| | Type | Amount*2 (parts by mass) | Type | Moisture*1 (ppm by mass) | Amount*2 (parts by mass) | Type | Moisture*1 (ppm by mass) | Amount*2 (parts by mass) | Type | Moisture*1 (ppm by mass) | Amount*2 (parts by mass) | Type | Moisture*1 (ppm by mass) | Amount*2 (parts by mass) | |
|---|---|---|---|---|---|---|---|---|---|---|---|---|---|---|---|
| Comparative Example 5 | A3 | 47.54 | C1 | 900 | 0.450 | D1 | 4200 | 0.15 | E1 | 143 | 1.00 | B4 | 250 | 25. 99 | 24.78 |
| | | | | | | | | | | | | B5 | 250 | 26.47 | |
| Comparative Example 6 | A2 | 50.28 | C1 | 900 | 0.012 | D1 | 4200 | 0.15 | E2 | 85 | 0.45 | B2 | 250 | 24.22 | 13.51 |
| | | | | | | | | | | | | B3 | 250 | 25.50 | |

Notes and abbreviations in Table 1 are as follows.

*1 Moisture content in each component

*2 Use amount of each component

*3 Total moisture content of additive before mixing with respect to amount of isocyanate component (ppm by mass)

[Polyisocyanate component]

A1: 1,3-bis(isocyanatomethyl) benzene

A2: mixture of 2,5-bis(isocyanatomethyl)-bicyclo[2.2.1]heptane and 2,6-bis(isocyanatomethyl)-bicyclo[2.2.1]heptane

A3: 1,3-bis(isocyanatomethyl) cyclohexane

[Polythiol component]

B1: mixture of 4,7-bis(mercaptomethyl)-3,6,9-trithia-1,11-undecanedithiol, 4,8-bis(mercaptomethyl)-3,6,9-trithia-1,11-undecanedithiol, and 5,7-bis(mercaptomethyl)-3,6,9-trithia-1,11-undecanedithio

B2: 4-mercaptomethyl-1,8-dimercapto-3,6-dithiaoctane

B3: pentaerythritol tetrakis(3-mercaptopropionate)

B4: 2,5-bis(mercaptomethyl)-1,4-dithiane

B5: pentaerythritol tetrakis(2-mercaptoacetate)

[Polymerization catalyst]

C1: dimethyltin dichloride (DMTDCl)

[Release agent]

D1: acidic phosphate "JP506H" (manufactured by Johoku Chemical Co., Ltd., butoxyethyl acid phosphate (mixture of compounds each having one or two butoxyethyl groups as substituents))

D2: acidic phosphate "ZelecUN" (manufactured by Du Pont)

[Ultraviolet absorber]

E1: 2-(2-hydroxy-4-octyloxyphenyl)-2H-benzotriazole "Seesorb 707" (manufactured by Shipro Kasei Kaisha, Ltd.)

E2: 2-(3-t-butyl-2-hydroxy-5-methylphenyl)-5-chloro-2H-benzotriazole "Seesorb 703" (manufactured by Shipro Kasei Kaisha, Ltd.)

[Table 2]

| | Polymerizable composition | Optical characteristics | | Evaluation | |
|---|---|---|---|---|---|
| | Moisture content of additive (ppm by mass) *1 | Refractive index (ne) | Abbe number (ve) | Foreign matter generation ratio (%) | White turbidity occurrence ratio (%) |
| Example 1 | 2.76 | 1.67 | 31 | 0.5 | 0 |
| Example 2 | 2.68 | 1.67 | 31 | 0.5 | 0 |
| Example 3 | 5.98 | 1.67 | 31 | 1.5 | 0.5 |
| Example 4 | 2.99 | 1.60 | 40 | 0.5 | 0 |
| Example 5 | 4.85 | 1.60 | 40 | 0.5 | 0 |
| Example 6 | 2.26 | 1.60 | 40 | 1.0 | 0.5 |
| Example 7 | 4.33 | 1.60 | 40 | 1.0 | 0.5 |
| Example 8 | 2.76 | 1.67 | 31 | 0.5 | 0 |
| Comparative Example 1 | 14.48 | 1.67 | 31 | 8 | 1 |
| Comparative Example 2 | 13.55 | 1.67 | 31 | 7 | 1 |
| Comparative Example 3 | 14.49 | 1.67 | 31 | 15 | 2.5 |
| Comparative Example 4 | 14.02 | 1.60 | 40 | 4 | 1 |
| Comparative Example 5 | 24.78 | 1.60 | 40 | 5 | 1 |
| Comparative Example 6 | 13.51 | 1.60 | 40 | 7 | 2.5 |
| *1: Total moisture content of additive with respect to polyisocyanate component (ppm by mass) | | | | | |

The embodiment disclosed here is exemplary in all respects, and it should be considered that the embodiment is not restrictive.

**Claims**

1.  A method for producing an optical component resin, comprising:

    a step of mixing a polythiol component, a polyisocyanate component, and an additive to obtain a polymerizable composition; and
    a step of polymerizing the polymerizable composition, wherein
    the additive before mixing has a total moisture content of 1.0 ppm by mass or more and 10 ppm by mass or less with respect to the amount of the polyisocyanate component, and
    a moisture content of the polythiol component is 1 ppm by mass or more and 600 ppm by mass or less;
    wherein the moisture content is determined as specified in the description.

2.  The method for producing an optical component resin according to claim 1, wherein, in the step of obtaining the polymerizable composition, the polyisocyanate component and the additive are mixed, and then the resulting mixture is mixed with a polythiol component.

3.  The method for producing an optical component resin according to claim 1 or 2, wherein, in the step of obtaining the polymerizable composition, the additive is added in a total amount of 0.01 parts by mass or more and 5 parts by mass or less with respect to 100 parts by mass of a total amount of a polythiol component and a polyisocyanate component.

4.  The method for producing an optical component resin according to any one of claims 1 to 3, wherein the polyisocyanate component contains at least one selected from the group consisting of 2,5-bis(isocyanatomethyl)-bicyclo[2.2.1]heptane, 2,6-bis(isocyanatomethyl)-bicyclo[2.2.1]heptane, 1,3-bis(isocyanatomethyl) cyclohexane, 1,4-bis(isocyanatomethyl) cyclohexane, 1,3-bis(isocyanatomethyl) benzene, 1,4-bis(isocyanatomethyl) benzene, dicyclohexylmethane-4,4'-diisocyanate, and isophorone diisocyanate.

5. The method for producing an optical component resin according to any one of claims 1 to 4, wherein the additive contains at least one selected from the group consisting of a polymerization catalyst, a release agent, and an ultraviolet absorber.

6. The method for producing an optical component resin according to claim 5, wherein the polymerization catalyst is a tin compound or a nitrogen-containing compound.

7. The method for producing an optical component resin according to claim 5 or 6, wherein the release agent is an acidic phosphate.

8. The method for producing an optical component resin according to any one of claims 5 to 7, wherein the ultraviolet absorber is a benzotriazole-based compound or a benzophenone-based compound.

9. The method for producing an optical component resin according to any one of claims 1 to 8, wherein, in the step of obtaining the polymerizable composition, the additive is added in a total amount of 0.5 parts by mass or more with respect to 100 parts by mass of a total amount of the polythiol component and the polyisocyanate component.

10. The method for producing an optical component resin according to any one of claims 1 to 9, wherein the additive contains at least an ultraviolet absorber, and an addition amount of the ultraviolet absorber is 0.10 ppm by mass or more with respect to 100 parts by mass of a total amount of the polythiol component and the polyisocyanate component.

**Patentansprüche**

1. Verfahren zur Herstellung eines Harzes für optische Komponenten, umfassend:

   einen Schritt des Mischens einer Polythiolkomponente, einer Polyisocyanatkomponente und eines Additivs, um eine polymerisierbare Zusammensetzung zu erhalten; und
   einen Schritt der Polymerisation der polymerisierbaren Zusammensetzung, wobei
   das Additiv vor dem Mischen einen Gesamtfeuchtigkeitsgehalt von 1,0 Massen-ppm oder mehr und 10 Massen-ppm oder weniger, bezogen auf die Menge der Polyisocyanatkomponente, aufweist, und
   der Feuchtigkeitsgehalt der Polythiolkomponente 1 Masse-ppm oder mehr und 600 Masse-ppm oder weniger beträgt;
   wobei der Feuchtigkeitsgehalt wie in der Beschreibung angegeben bestimmt wird.

2. Verfahren zur Herstellung eines Harzes für optische Komponenten nach Anspruch 1, wobei in dem Schritt der Herstellung der polymerisierbaren Zusammensetzung die Polyisocyanatkomponente und das Additiv gemischt werden und dann die resultierende Mischung mit einer Polythiolkomponente gemischt wird.

3. Verfahren zur Herstellung eines Harzes für optische Komponenten nach Anspruch 1 oder 2, wobei in dem Schritt der Herstellung der polymerisierbaren Zusammensetzung das Additiv in einer Gesamtmenge von 0,01 Masseteilen oder mehr und 5 Masseteilen oder weniger, bezogen auf 100 Masseteile der Gesamtmenge einer Polythiolkomponente und einer Polyisocyanatkomponente, zugesetzt wird.

4. Verfahren zur Herstellung eines Harzes für optische Komponenten nach einem der Ansprüche 1 bis 3, wobei die Polyisocyanatkomponente mindestens eine Komponente enthält, die ausgewählt ist aus der Gruppe bestehend aus 2,5-Bis(isocyanatomethyl)-bicyclo[2.2.1]heptan, 2,6-Bis(isocyanatomethyl)-bicyclo[2.2.1]heptan, 1,3-Bis(isocyanatomethyl)cyclohexan, 1,4-Bis(isocyanatomethyl)cyclohexan, 1,3-Bis(isocyanatomethyl)benzol, 1,4-Bis(isocyanatomethyl)benzol, Dicyclohexylmethan-4,4'-diisocyanat und Isophorondiisocyanat.

5. Verfahren zur Herstellung eines Harzes für optische Komponenten nach einem der Ansprüche 1 bis 4, wobei das Additiv mindestens einen Bestandteil enthält, der aus der Gruppe ausgewählt ist, die aus einem Polymerisationskatalysator, einem Trennmittel und einem Ultraviolettabsorber besteht.

**6.** Verfahren zur Herstellung eines Harzes für optische Komponenten nach Anspruch 5, wobei der Polymerisationskatalysator eine Zinnverbindung oder eine stickstoffhaltige Verbindung ist.

**7.** Verfahren zur Herstellung eines Harzes für optische Komponenten nach Anspruch 5 oder 6, wobei das Trennmittel ein saures Phosphat ist.

**8.** Verfahren zur Herstellung eines Harzes für optische Komponenten nach einem der Ansprüche 5 bis 7, wobei der Ultraviolettabsorber eine Verbindung auf Benzotriazolbasis oder eine Verbindung auf Benzophenonbasis ist.

**9.** Verfahren zur Herstellung eines Harzes für optische Komponenten nach einem der Ansprüche 1 bis 8, wobei in dem Schritt der Herstellung der polymerisierbaren Zusammensetzung das Additiv in einer Gesamtmenge von 0,5 Masseteilen oder mehr, bezogen auf 100 Masseteile der Gesamtmenge der Polythiolkomponente und der Polyisocyanatkomponente, zugesetzt wird.

**10.** Verfahren zur Herstellung eines Harzes für optische Komponenten nach einem der Ansprüche 1 bis 9, wobei das Additiv mindestens einen Ultraviolettabsorber enthält und die Zugabemenge des Ultraviolettabsorbers 0,10 Massen-ppm oder mehr beträgt, bezogen auf 100 Massenteile der Gesamtmenge der Polythiolkomponente und der Polyisocyanatkomponente.

**Revendications**

**1.** Procédé de production d'une résine de composant optique, comprenant :

  une étape de mélange d'un composant polythiol, d'un composant polyisocyanate et d'un additif pour obtenir une composition polymérisable ; et
  une étape de polymérisation de la composition polymérisable, dans lequel
  l'additif avant mélange a une teneur en humidité totale de 1,0 ppm en masse ou plus et de 10 ppm en masse ou moins par rapport à la quantité du composant polyisocyanate, et
  la teneur en humidité du composant polythiol est supérieure ou égale à 1 ppm en masse et inférieure ou égale à 600 ppm en masse ;
  dans lequel le taux d'humidité est déterminé comme spécifié dans la description.

**2.** Procédé de production d'une résine de composant optique selon la revendication 1, dans lequel, dans l'étape d'obtention de la composition polymérisable, le composant polyisocyanate et l'additif sont mélangés, puis le mélange résultant est mélangé avec un composant polythiol.

**3.** Procédé de production d'une résine de composant optique selon la revendication 1 ou 2, dans lequel, lors de l'étape d'obtention de la composition polymérisable, l'additif est ajouté en une quantité totale de 0,01 partie en masse ou plus et de 5 parties en masse ou moins par rapport à 100 parties en masse d'une quantité totale d'un composant de polythiol et d'un composant de polyisocyanate.

**4.** Procédé de production d'une résine de composant optique selon l'une des revendications 1 à 3, dans lequel le composant polyisocyanate contient au moins un élément choisi dans le groupe constitué de 2,5-bis(isocyanatométhyl)-bicyclo[2.2.1]heptane, 2,6-bis(isocyanatométhyl)-bicyclo[2.2.1]heptane, 1,3-bis(isocyanatométhyl)cyclohexane, 1,4-bis(isocyanatométhyl)cyclohexane, 1,3-bis(isocyanatométhyl)benzène, 1,4-bis(isocyanatométhyl)benzène, dicyclohexylméthane-4,4'-diisocyanate, et diisocyanate d'isophorone.

**5.** Procédé de production d'une résine de composant optique selon l'une des revendications 1 à 4, dans lequel l'additif contient au moins un élément choisi dans le groupe constitué d'un catalyseur de polymérisation, d'un agent de démoulage et d'un absorbeur d'ultraviolets.

**6.** Procédé de production d'une résine de composant optique selon la revendication 5, dans lequel le catalyseur de polymérisation est un composé d'étain ou un composé contenant de l'azote.

**7.** Procédé de production d'une résine de composant optique selon la revendication 5 ou 6, dans lequel l'agent de démoulage est un phosphate acide.

8. Procédé de fabrication d'une résine de composant optique selon l'une des revendications 5 à 7, dans lequel l'absorbeur d'ultraviolets est un composé à base de benzotriazole ou un composé à base de benzophénone.

9. Procédé de production d'une résine de composant optique selon l'une des revendications 1 à 8, dans lequel, lors de l'étape d'obtention de la composition polymérisable, l'additif est ajouté en une quantité totale de 0,5 parties en masse ou plus par rapport à 100 parties en masse d'une quantité totale du composant polythiol et du composant polyisocyanate.

10. Procédé de production d'une résine de composant optique selon l'une des revendications 1 à 9, dans lequel l'additif contient au moins un absorbeur d'ultraviolets, et une quantité d'addition de l'absorbeur d'ultraviolets est de 0,10 ppm en masse ou plus par rapport à 100 parties en masse d'une quantité totale du composant de polythiol et du composant de polyisocyanate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015226879 A1
- WO 2008047626 A